Europäisches Patentamt

(19) European Patent Office

Office européen des brevets

(11) Publication number: **0 029 593**

**A1**

(12) **EUROPEAN PATENT APPLICATION**

(21) Application number: **80107267.9**

(22) Date of filing: **21.11.80**

(51) Int. Cl.³: **C 09 D 3/81**
**C 09 D 3/80, C 08 L 33/12**

(30) Priority: **21.11.79 US 96289**
**05.05.80 US 146262**

(43) Date of publication of application:
**03.06.81 Bulletin 81/22**

(84) Designated Contracting States:
**BE CH DE FR GB IT LI NL SE**

(71) Applicant: **E.I. DU PONT DE NEMOURS AND COMPANY**
**Legal Department 1007 Market Street**
**Wilmington, Delaware 19898(US)**

(72) Inventor: **Chang, David Chi-Kung**
**945 Stephenson Highway**
**Troy Michigan 48084(US)**

(74) Representative: **Abitz, Walter, Dr.-Ing. et al,**
**Abitz, Morf, Gritschneder P.O. Box 86 01 09**
**D-8000 München 86(DE)**

(54) **A coating composition based on acrylic polymer blends, articles coated therewith, and process for preparing said coated articles.**

(57) A liquid coating composition is disclosed consisting essentially of an acrylic polymer blend, an inert organic solvent, an ultraviolet light stabilizer, and an antioxidant. The weatherability and durability of finishes prepared therefrom are significantly increased.

EP 0 029 593 A1

FF-7630-A

A Coating Composition Based On Acrylic Polymer Blends, Articles Coated Therewith, and Process For Preparing Said Coated Articles.

## BACKGROUND OF THE INVENTION

This invention relates to coating compositions. In particular, it is directed toward lacquers whose principal film-forming ingredients are two-component blends of acrylic polymers, as disclosed in Zimmt United States Patent 3,823,205 issued July 9, 1974, which lacquers contain one or more ultraviolet light stabilizers to diminish the degradation effects of the ultraviolet radiation in sunlight and one or more antioxidants selected to inhibit or retard the rate of oxidation.

Sunlight is composed of electromagnetic radiation with energy in the infrared, visible, and ultraviolet portions of the spectrum. When the ultraviolet portion of sunlight falls upon a clear surface coating, the energy may be partially or wholly absorbed by the coating. In many instances, the energy absorbed initiates a photochemical reaction which causes discoloration and/or physical failure of the coating. Pigmented surface coatings also suffer from ultraviolet degradation. The inclusion of an ultraviolet light stabilizer can increase the useful life of both clear and pigmented coatings. Ultraviolet light stabilizers protect the coatings by absorbing the destructive, high energy ultraviolet rays and converting such energy into non-destructive heat energy.

2

Antioxidants are useful in preventing the oxidation of polymers, or for inhibiting oxidation already begun by oxygen, air, ozone or oxidizing agents of many types. The rate of thermal oxidation of the polymeric systems used in coating compositions is normally rather slow, i.e., a reaction that occurs over weeks, months, or years under ordinary conditions. However, even though the reaction may be slow, pronounced effects may be readily obervable very early in the degradative reaction. Furthermore, more rapid oxidative degradation occurs in the presence of ultraviolet radiant energy. Antioxidants can assist ultraviolet light stabilizers in effectively retarding this degradation.

Acrylic lacquer finishes are widely used on the exterior of automobiles and trucks. It has been found that an excellent appearance along with depth of color and metallic glamour can be obtained by applying a clear or transparent coat over the conventional colored or pigmented coat. However, the weatherability and durability of these clear coats have been found to be poor since checking, cracking and flaking of the clear coat occurs after relatively short periods of exposure to outdoor weathering which gives the automobile or truck an unsightly appearance. Refinishing of these weathered clear coats is difficult and expensive since the clear coat must be sanded to remove cracked and flaked clear coat before a refinish coat can be applied.

In an effort to retard or substantially reduce checking, cracking and flaking of the clear coat, conventional ultraviolet light stabilizers with and without antioxidants have been added to the clear coat. Also, a combination of a transparent pigment and an ultraviolet light screener has been added to the clear coat, as suggested by LaBerge United States Patent 3,407,156 issued October 22, 1968. In each of the cases mentioned, the durability and weatherability of the clear coat was increased for a relatively short length of time but not to the extent required for a practical automotive or truck finish. There exists a felt need for acrylic lacquers effectively stabilized against ultraviolet radiation and the concomitant oxidative degradation, for use in a clear coat/color coat system.

Ultraviolet light stabilizers and antioxidants have traditionally been used only in those coating compositions which are utilized as topcoats. The problem with this procedure has been the tendency of the stabilizer or antioxidant to leach out of the topcoat and escape into the atmosphere, leaving the topcoat susceptible to weathering.

The composition of this invention, containing ultraviolet light stabilizer and antioxidant, has a preferred utility of being used as a clear coat/color coat finish and particularly as the color coat of such a finish. It is theorized that the ultraviolet light stabilizer and antioxidant will migrate from the color coat into the clear coat, thereby protecting the clear coat against weathering. The preferred finish is one in which both the clear coat and the color coat contain as additives one or more ultraviolet light stabilizers and one or more antioxidants. Some of the additives will be consumed from the clear surface through leaching, evaporation, and photochemical reaction. The high concentration of additives in the color coat will serve as a reservoir and replenish the lost additives through diffusion from the color coat to the clear coat.

4

Acrylic lacquers prepared according to the teachings of Zimmt United States Patent 3,823,205 give finishes having excellent air-dry gloss and higher water-spot-free temperatures and lower craze-free temperatures than finishes formed from compositions whose film-forming components are conventional polymer systems. These advantages make the Zimmt lacquers useful as automotive lacquers. The novel compositions of this invention, consisting essentially of the Zimmt lacquers plus ultraviolet light stabilizers and antioxidants, are even more useful, particularly when utilized in clear coat/color coat finishes as described.

## SUMMARY OF THE INVENTION

Acrylic lacquers are prepared according to the teachings of Zimmt United States Patent 3,823,205. The lacquer may be either clear or pigmented, depending upon its intended use. These lacquers contain about 1-20% by weight, based on the weight of the film-forming constituents, of ultraviolet light stabilizer and about 0.1-5% by weight, based on the weight of the film-forming constituents, of antioxidant. The ratio of ultraviolet light stabilizer to antioxidant is about 1:1 to about 50:1. Preferred, to form a durable finish, about 5-8% by weight of stabilizer is used along with about 0.1-1% by weight of antioxidant, and the ratio of stabilizer to antioxidant is about 10:1.

## DETAILED DESCRIPTION OF THE INVENTION

A coating composition has been developed in which ultraviolet light stabilizer and antioxidant are incorporated into an acrylic lacquer prepared by the method disclosed in Zimmt United States Patent 3,823,205. The teachings of the Zimmt patent are hereby incorporated by reference.

The principal film-forming ingredients in these lacquers are two-component blends of acrylic polymers. One component of these blends (Component A), making up at least 5% of the blends' total weights, can be poly(methyl methacrylate), poly(ethyl methacrylate), poly(propyl methacrylate), poly(isopropyl methacrylate), or a copolymer of methyl methacrylate with at least one of an alkyl acrylate whose alkyl group contains 1 through 20 carbon atoms, an alkyl methacrylate whose alkyl group contains 2 through 18 carbon atoms, or styrene. Mixtures of these can be also used.

The other component of the blends (Component B), also making up at least 5% of the blends' total weights, is a two-monomeric component copolymer of methyl methacrylate with at least one of an alkyl acrylate whose alkyl group contains 1 through 10 carbon atoms or an alkyl methacrylate whose alkyl group contains 4 through 18 carbon atoms. Mixtures of these can also be used. The differences in glass transition temperature between Component A and Component B is at least 30°C.

One preferred acrylic lacquer is a solution in which Component A is at least one of

(1)   poly(methyl methacrylate),

(2)   poly(ethyl methacrylate),

(3)   poly(propyl methacrylate),

(4)   poly(isopropyl methacrylate),

(5)   a copolymer composed only of methyl methacrylate and at least one of an alkyl acrylate whose alkyl group contains 1 through 20 carbon atoms, an alkyl methacrylate whose alkyl group contains 2 through 18 carbon atoms, or styrene, or

(6)   mixtures of these; and Component B is at least one of

(1)    a copolymer composed only of methyl methacrylate
       and an alkyl acrylate whose alkyl group contains
       1 through 10 carbon atoms or an alkyl methacrylate
       whose alkyl group contains 4 through 18 carbon
       atoms, or

(2)    mixtures of said copolymers; and
the solution contains an inert organic solvent for the
above polymers.

    In another acrylic lacquer, particularly preferred, Component A of the blend is poly(methyl methacrylate) and Component B is at least one of

(1)    a methyl methacrylate/methyl acrylate copolymer
       whose monomer unit weight ratio is 70/30 to 40/60
       respectively,

(2)    a methyl methacrylate/ethyl acrylate copolymer
       whose monomer unit weight ratio is 80/20 to 40/60
       respectively,

(3)    a methyl methacrylate/butyl acrylate copolymer
       whose monomer unit weight ratio  is 85/15 to 65/35
       respectively,

(4)    a methyl methacrylate/2-ethylhexyl acrylate copolymer whose monomer unit weight ratio is 90/10
       to 70/30 respectively,

(5)    a methyl methacrylate/octyl methacrylate copolymer
       whose monomer unit weight ratio is 85/15 to 65/35
       respectively, or

(6)    a methyl methacrylate/lauryl methacrylate copolymer whose monomer unit weight ratio is 90/10 to
       75/25 respectively.

    The lacquers are prepared by first selecting
Component A and Component B and their concentrations
according to the properties desired of the finish and
then thoroughly  mixing solutions or dispersions of
these components in organic liquids, together with such
other adjuncts as appear desirable.  Illustrative of organic liquids which can be used are toluene, ketones such as acetone or methyl ethyl ketone, alcohols such as ethanol and 2-propanol, or mixtures of these. Before use, the compositions are thinned to application viscosity with customary lacquer solvents. These compositions will ordinarily have solids contents of from about 20% to 40%, by weight, of the total composition.

Well-known standard solution polymerization techniques and conventional catalysts are used in the preparation of Components A and B.

It is generally desirable to add plasticizer to the compositions. Plasticizers compatible with poly(methyl methacrylate), such as dibutyl phthalate, bis(methylcyclohexyl)phthalate, butyl benzyl phthalate, tributyl citrate, polyester plasticizers and alkyd resins,are satisfactory. Whichever plasticizer is used, it is ordinarily present at a concentration of from about 2% through about 25%, by weight, of the solids of the composition.

The acrylic lacquer can contain an alkyd resin and a cellulose acetate butyrate resin. If it is to be employed as a color coat, the lacquer contains pigment in a pigment-to-binder weight ratio of about 1/100 to about 150/100. Any of the conventional pigments used in coating compositions, including metallic flake pigments, can be used. If the lacquer is to be employed as a clear coat, it may contain transparent pigments, _i.e._, pigments having the same or similar refractive index as the binder of the clear coat which are of a small particle size of about 0.015-50 microns. Typical pigments that can be used in a pigment-to-binder weight ratio of about 1/100 to 10/100 include inorganic siliceous pigments such as silica pigments. These pigments have a refractive index of about 1.4-1.6.

Typical ultraviolet light stabilizers that are useful in this invention, either singly or in combination, are as follows:

Benzophenones such as hydroxydodecycloxy-benzophenone, 2,4-dihydroxybenzophenone, hydroxybenzophenones containing sulfonic acid groups, 2,4-dihydroxy-3',5'-di-t-butylbenzophenone, 2,2',4'-trihydroxybenzophenone esters of dicarboxylic acids, 2-hydroxy-4-acryloxyethoxybenzophenone, aliphatic monoesters of 2,2',4-trihydroxy-4'-alkoxybenzophenone, 2-hydroxy-4-methoxy-2'-carboxybenzophenone;

Triazoles such as 2-phenyl-4-(2'-4'-dihydroxybenzoyl)triazoles, substituted benzotriazoles such as hydroxyphenyltriazoles such as 2-(2'-hydroxy-5'-methylphenyl)benzotriazole, 2-(2'-hydroxyphenyl)benzotriazole, 2-(2'-hydroxy-5'-octylphenyl)naphthotriazole;

Triazines such as 3,5-dialkyl-4-hydroxyphenyl derivatives of triazine, sulfur-containing derivatives of diallyl-4-hydroxyphenyltriazines, hydroxyphenyl-1,3,5-triazines and such triazines containing sulfonic acid groups, aryl-1,3,5-triazines, orthohydroxyaryl-s-triazine;

Benzoates such as dibenzoate of diphenylolpropane, t-butyl benzoate of diphenylolpropane, nonyl phenyl benzoate, octyl phenyl benzoate, resorcinol dibenzoate.

Other ultraviolet light stabilizers that can be used include lower alkyl thiomethylene-containing phenols, substituted benzenes such as 1,3-bis(2'-hydroxybenzoyl)benzene, metal derivatives of 3,5,-di-t-butyl-4-hydroxyphenylpropionic acid, asymmetrical oxalic acid diarylamides, alkylhydroxyphenylthioalkanoic acid esters, dialkylhydroxyphenylalkanoic acid esters of di- and tri- pentaerythritol, phenyl- and naphthlene-substituted oxalic acid diamides, methyl-β-(3,5-di-t-butyl-4-hydroxyphenyl)propionate, $\gamma$,$\gamma$'-bis(2-hydroxyphenyl)diisopropylbenzene, 3,5'-dibromo-2'-hydroxyacetophenone, ester derivatives of 4,4-bis(4'-hydroxyphenyl)pentanoic acid wherein there is at least one unsubstituted position ortho to the aromatic hydroxyl groups, organophosphorus sulfides such as bis(diphenylphosphinothioyl)monosulfide and bis(diphenylphosphinothioyl)disulfide, 4-benzoyl-6-(dialkylhydroxybenzyl)resorcinol, bis(3-hydroxy-4-benzoylphenoxy)diphenylsilane, bis(3-hydroxy-4-benzoylphenoxy)dialkylsilane, 1,8-naphthalimides, $\gamma$-cyano-$\beta$,$\beta$-diphenylacrylic acid derivatives, bis(2-benzoxazolyl)alkanes, bis(2-napthoxazolyl)alkanes, methylene malonitriles containing aryl and heterocyclic substitutes, alkylenebis(dithio)carbamate, 4-benzoyl-3-hydroxyphenoxyethyl acrylate, 4-benzoyl-3-hydroxyphenoxyethyl methacrylate, aryl- or alkyl-substituted acrylonitriles, 3-methyl-5-isopropylphenyl-6-hydroxycoumarone.

Particularly useful ultraviolet light stabilizers that can be used are hindered amines of bipiperidyl derivatives such as those disclosed in Murayama et al., U.S. Patent 4,061,616, issued December 6, 1977, column 2, line 65, through column 4, line 2, and nickel compounds such as /1-phenyl-3-methyl-4-decanoylpyrazolate (5)7-Ni, bis/phenyldithiocarbamato7-Ni(II), and others listed in the above patent, column 8, line 44 through line 55.

Typical antioxidants are as follows: tetrakis-alkylene dialkylhydroxyaryl alkyl ester alkanes such as tetrakismethylene-3-(3',5'-dibutyl-4'-hydroxyphenyl)propionate methane, the reaction product of p-aminodiphenylamine and glycidyl methacrylate, the reaction product of n-hexyl-N'-phenyl-p-phenylene diamine and glycidyl methacrylate, pentaerythritol tetrakis(thioglycolate), trimethylolpropane tris(thioglycolate), trimethylolethane tris(thioglycolate), N-(4-anilinophenyl)acrylamide, N-(4-anilinophenol)maleamic acid, N-(4-anilinophenyl)maleimide, alkylhydroxyphenyl groups bonded through carboalkoxy linkages to the nitrogen atom of a heterocyclic nucleus containing an imidocarbonyl group or an imidodithiocarbonyl group, 3,5-di-t-butyl-4-hydroxycinnamonitrile, ethyl-3,5-di-t-hexyl-4-hydroxycinnamate, substituted benzyl esters of β-substituted hydroxyphenylpropionic acids, bis(hydroxyphenylalkylene) alkyl isocyanurate compounds, tetrakishydroxybenzylphosphonium halides alone or in combination with a dialkylthiodialkanoate, thiodimethylidyne tetrakisphenols alone or in combination with a dialkyl thiodialkanoate or phosphite or phosphonate, dihydrocarbylhydroxyphenylaryl or -alkyl phosphonites or phosphonates or phosphates or phosphites or phosphinates or phosphinites or phosphorothionates or phosphinothionates, diphenylbis(3,5-di-t-butyl-4-hydroxyphenoxy)silane, hydrocarbylhydroxyphenyldihydrocarbyldithiocarbamates such as 3,5-di-t-butyl-4-hydroxyphenyldimethyldithiocarbamate and aminobenzylthioether.

Acrylic lacquers prepared in the manner described and containing about 1-20% by weight of ultraviolet light stabilizer and about 0.1-5% by weight of

11

antioxidant, and preferably about 5-8% by weight of ultraviolet light stabilizer and about 0.1-1% by weight of antioxidant, based on the weight of the binder, prove particularly useful in the clear coat/ color coat finishes described. The weight ratio of ultraviolet light stabilizer to antioxidant ranges from about 1:1 to about 50:1 and is preferably about 10:1.

The lacquers can be applied to a variety of substrates, such as glass, plastics, metal and the like, by spraying, dipping or brushing. Although the wet films can be air-dried without sacrificing gloss, it is preferred that they be baked at temperatures of from about 105°C. to about 165°C. for about 20 to 30 minutes.

### EXAMPLE

The following constituents are blended together to form the color coat:

| | Parts by Weight |
|---|---|
| **Portion 1** | |
| Acetone | 4.65 |
| Alkyd resin solution (85% solids alkyd resin of ethylene glycol/phthalic anhydride/ coconut oil having a hydroxyl number of about 20 and an acid number of about 8-10 in toluene and having a Gardner Holdt vis-cosity of about S measured at 25°C.) | 4.77 |
| **Portion 2** | |
| Aluminum flake mill base /29.8 poly(methyl methacrylate), 12.4% aluminum flake and 57.8% solvent mixture of toluene and acetone/ | 7.74 |
| Blue mill base /10% "Monastral" blue flake, 16% poly(methyl methacrylate), 74% solvent mixture of toluene and acetone/ | 1.70 |
| Carbon black mill base /6% carbon black pig-ment, 24% poly(methyl methacrylate), 70% sol-vent mixture of toluene, acetone, ethylene glycol monoether acetate, butyl acetate/ | 0.17 |
| Green mill base /8.33% "Monastral" green pig-ment, 21.11% poly(methyl methacrylate), 70.66% solvent mixture of toluene/acetone/ xylene/ | 0.18 |

<u>Portion 3</u>

| | |
|---|---|
| Silicone solution (4% silicone SF69 in xylene) | 0.02 |
| PMMA solution /40% solids of poly(methyl methacrylate) ratio of 70/30/ | 1.35 |
| PMMA/DEAM solution (40% solids of a co-polymer of 99% methyl methacrylate and 1% diethylaminoethyl methacrylate in acetone/toluene, 27/73 ratio) | 2.02 |
| PMMA/BA solution (40% solids of a copoly-mer of 85% methyl methacrylate and 15% butyl acrylate in acetone/toluene, 17/83 ratio) | 10.01 |
| PBA solution /50% solids poly(butyl acrylate) in xylene/ | 0.10 |
| CAB solution I (25% solids cellulose ace-tate butyrate having a 37% butyryl content and a 2 second viscosity in toluene/ace-tone, 70/30 ratio) | 6.49 |
| CAB solution II (15% solids cellulose ace-tate butyrate having a 38% butyryl content and a 20 second viscosity in toluene/ acetone, 70/30 ratio) | 10.82 |
| Ultraviolet light stabilizer /2-(2'-hydroxy-phenyl)benzotriazole/ | 0.88 |
| Antioxidant /tetrakismethylene-3-(3',5'-dibutyl-4'-hydroxyphenyl)propionate methane/ | 0.09 |
| Total | 50.99 |

Portion 1 is charged into a mixing vessel and mixed for 10 minutes, portion 2 is added and mixed for 10 minutes, and then portion 3 is added and mixed for 20 minutes. The resulting paint has a weight solids content of 32.41% and a binder content of 30.8% by weight.

The clear coat is prepared by blending to-gether the following constituents:

|  | Parts by Weight |
|---|---|
| Toluene | 1.46 |
| Acetone | 5.80 |
| Ethylene glycol monobutyl ethyl acetate | 2.36 |
| Alkyd resin solution (90% solids in toluene of an alkyd resin of adipic acid, neopentyl glycol/benzoic acid having a Gardner Holdt viscosity of U-W measured at 25°C.) | 2.80 |
| Silicone solution (described above) | 0.02 |
| PMMA solution (described above) | 7.41 |
| PMMA/DEAM solution (described above) | 4.11 |
| PMMA/BA solution (40% solids of a co-polymer of 82% methyl methacrylate and 18% butyl acrylate in acetone/toluene, 17/83 ratio) | 16.73 |
| PBA solution (described above) | 0.10 |
| CAB solution (25% solids of cellulose acetate butyrate having a 37% butyryl content and a 2 second viscosity in acetone/ethylene glycol monobutyl ether acetate, 94/6 ratio) | 9.23 |
| Ultraviolet light stabilizer (described above) | 0.41 |
| Antioxidant (described above) | 0.04 |
| Total | 50.47 |

The above constituents are blended together to form a clear coat composition having a binder solids content of 32.35%.

The color coat and clear coat compositions are each reduced with a paint thinner of acetone/toluene/xylene in a ratio of 22.5/43.5/34 to a spray viscosity of 47.5 seconds measured at 25°C. with a No. 1 Fisher Cup.

The color coat is sprayed onto the intended substrate and allowed to air dry for 10 minutes. The clear coat is then sprayed onto the color coat and allowed to air dry for 10 minutes. The color coat should be about 1.0 mil thick and the clear coat about 1.3 mils thick. The substrate is baked for 30 minutes at 155°C.

This clear coat/color coat system will have an outdoor durability substantially better than that of an identical acrylic solution lacquer system which does not contain ultraviolet light stabilizer and antioxidant.

## CLAIMS

1.    A coating composition consisting essentially of:

I.    As a film-forming component

    (A)    at least one of

        (1)    poly(methyl methacrylate),

        (2)    poly(ethyl methacrylate),

        (3)    poly(propyl methacrylate),

        (4)    poly(isopropyl methacrylate),

        (5)    a copolymer composed only of methyl methacrylate and at least one of an alkyl acrylate whose alkyl group contains 1 through 20 carbon atoms, an alkyl methacrylate whose alkyl group contains 2 through 18 carbon atoms, or styrene, or

        (6)    mixtures of these; and

    (B)    at least one of

        (1)    a copolymer composed only of methyl methacrylate and an alkyl acrylate whose alkyl group contains 1 through 10 carbon atoms or an alkyl methacrylate whose alkyl group contains 4 through 18 carbon atoms, or

        (2)    mixtures of said copolymers; and

II.    An inert organic solvent for (A) and (B); each of (A) and (B) being present in concentrations of at least 5% of their total weight; the difference between the glass transition temperatures of (A) and (B) being at least 30°C.; and (A) and (B), when blended as entities and cast from solution, giving an optically clear film;

III.    At least one ultraviolet light stabilizer; and IV.    At least one antioxidant.

2. A composition according to claim 1 wherein (A) is poly(methyl methacrylate) and (B) is at least one of:

(1) a methyl methacrylate(methyl acrylate copolymer whose monomer unit weight ratio is 70/30 to 40/60 respectively,

(2) a methyl methacrylate/ethyl acrylate copolymer whose monomer unit weight ratio is 80/20 to 40/60 respecively,

(3) a methyl methacrylate/butyl acrylate copolymer whose monomer unit weight ratio is 86/15 to 65/35 respectively,

(4) a methyl methacrylate/2-ethylhexyl acrylate copolymer whose monomer unit weight ratio is 90/10 to 70/30 respectively,

(5) a methyl methacrylate/octyl methacrylate copolymer whose monomer unit weight ratio is 85/15 to 65/35 respectively, or

(6) a methyl methacrylate/lauryl methacrylate copolymer whose monomer unit weight ratio is 90/10 to 75/25 respectively.

3. A composition according to claim 1 or 2 also containing plasticizer.

4. A composition according to any one of claims 1 to 3 wherein pigment is added to the transparent film-forming binder in a pigment-to-binder weight ratio of about 1/100 to 150/100.

5. A composition according to any one of claims 1 to 4 containing in addition to the acrylic polymer an alkyd resin and cellulose acetate butyrate.

6. A composition according to any one of claims 1 to 5 which contains up to about 10% by weight, based on the weight of the film-forming constituents, of iron pyrophosphate and up to about 15% by weight of finely-divided silica.

7. A composition according to any one of claims 1 to 6 wherein the ultraviolet light stabilizer is a substituted benzotriazole, preferably a 2-(2'-hydroxyphenyl) benzotriazole.

8. A composition according to any one of claims 1 to 7 which contains about 1-20%, preferably 5-8% by weight, based on the weight of the film-forming constituents, of ultraviolet light stabilizer.

9. A composition according to any one of claims 1 to 8 which contains about 0.1-5% by weight, based on the weight of the film-forming constituents, of antioxidant, preferably tetrakismethylene-3-(3'-5'-dibutyl-4'-hydroxyphenyl)propionate methane; wherein the weight ratio of ultraviolet light stabilizer to antioxidant is about 1:1 to about 50:1.

10. A composition according to any one of claims 1 to 9 which contains about 0.1-1% by weight, based on the weight of the film-forming constituents, of antioxidant, wherein the weight ratio of ultraviolet light stabilizer to antioxidant is about 10:1.

11. A coated article consisting essentially of a substrate, a first coating on said substrate, said first coating consisting essentially of a film-forming binder of the coating composition of claim 1 containing pigments in a pigment-to-binder weight ratio of about 1/100 to 150/100, and a transparent second coating over said first coating.

12. A coated article according to claim 11 wherein the first coating is about 1.0 mil thick and the second coating is about 1.3 mils thick, and wherein preferably both the first and second coating contain ultraviolet light stabilizer.

13. A coated article according to claim 11 wherein both the first and second coating consist essentially of the composition of claim 2.

14.  A process for producing an acrylic lacquer finish having excellent aesthetic properties and outstanding weatherability and durability, which comprises:

A.  depositing an a substrate a first coating consisting essentially of the composition of claim 1 containing pigment in a pigment-to-binder weight ratio of about 1/100 to 150/100;

B.  allowing said substrate to air dry for about 10 minutes;

C.  depositing over said first coating a transparent second coating; and

D.  heating the resultant multilayer coating for about 30 minutes at a temperature within the range of about 105°C. to 165°C.

## DOCUMENTS CONSIDERED TO BE RELEVANT

| Category | Citation of document with indication, where appropriate, of relevant passages | Relevant to claim |
|---|---|---|
| X | CHEMICAL ABSTRACTS, vol. 83, 1975 page 55, abstract no. 180327g COLUMBUS, Ohio (US) & JP - A - 75 58 141 (SANKYO CO. LTD.)(May 20, 1975)  * the whole abstract * | 1-14 |
| D | US - A - 3 823 205 (W.S. ZIMMT)  * claims * | 1-14 |
|  | FR - A - 1 551 585 (LAVORAZIONE MATERIE PLASTICHE)  * abstract * | 1-14 |
|  | US - A - 3 522 207 (D.H.A. HAYER et al.)  * claims * | 1-14 |
|  | FR - A - 1 429 032 (AMERICAN CYANAMID)  * abstract * | 1-14 |

**CLASSIFICATION OF THE APPLICATION (Int. Cl.³)**

C 09 D 3/81
3/80
C 08 L 33/12

**TECHNICAL FIELDS SEARCHED (Int. Cl.³)**

C 09 D 3/81
3/80
C 08 L 33/00
33/02
33/04
33/06
33/08
33/10
33/12
C 09 D 5/32
C 08 K 5/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 25-02-1981 | FOUQUIER |

EPO Form 1503.1  06.78